# DEMANDE DE BREVET EUROPEEN

(11) **EP 1 298 935 A2**
(43) Date de publication de la demande: **02.04.2003**
(21) Numéro de dépôt: 02292260.3
(22) Date de dépôt: 16.09.2002
(51) Int. Cl.: H04N 7/30

(54) **Procédé et dispositif de compression d'un signal d'image**

(30) Priorité: 21.09.2001 FR 0112209
(71) Demandeur: STMicroelectronics S.A., 92120 Montrouge (FR); Groupe des Ecoles des Telecommunications, 75634 Paris Cedex 13 (FR); STMicroelectronics Pte Ltd., Singapore 569508 (SG)
(72) Inventeur: Bard, Jean-Michel, 38920 Crolles (FR); Danger, Jean-Luc, 92160 Antony (FR); Hui, Lucas, Singapore 572797 (FR); Cunat, Christophe, 75013 Paris (FR)
(74) Mandataire: Regi, François-Xavier (FR)

(57) **Abrégé**

Procédé de compression d'un signal d'image numérique dans lequel un premier jeu de pas de quantification, unique pour un segment donné, est déterminé pour que le nombre de bits nécessaires pour coder les données quantifiées correspondant à ce segment soit supérieur à une valeur cible. Ce premier jeu de pas de quantification étant ensuite modifié, en priorité, pour les blocs du segment pour lesquels le gain, au cours de cette modification, sur la réduction du nombre de bits nécessaires pour coder les données quantifiées correspondant au segment auquel il appartient, est le plus élevé. Cette modification est effectuée, sur autant de blocs qu'il est nécessaire pour que le nombre de bits de ce segment soit inférieur ou égal à la valeur cible.

Dispositif pour la mise en oeuvre de ce procédé.

## Description

L'invention est relative à un procédé de compression d'un signal d'image numérique, notamment d'un signal vidéo, et à un dispositif pour mettre en oeuvre ce procédé.

Plus précisément, l'invention est relative à la compression, par des dispositifs qui convertissent des signaux vidéo analogiques en signaux numériques et les codent par transformation dans un domaine de fréquences, en particulier afin de stocker les informations correspondantes sur des supports magnétiques. Ce sont par exemple des dispositifs appelés VTR selon l'acronyme de l'expression anglo-saxonne Video Tape Recorder.

Une image est généralement enregistrée sur un support sous la forme d'une collection de données associées à des points de l'image appelés pixels. Pour ce faire, l'image est décomposée en matrices de pixels. Par exemple, dans le système de couleur Rouge-Vert-Bleu, une matrice de pixels est associée à chacune de ces trois composantes de la couleur. Ces trois composantes sont fréquemment remplacées par une composante de luminance associée à deux composantes de chrominance.

Un signal vidéo est constitué d'une succession de telles images.

On connaît déjà des procédés de compression d'un signal vidéo numérique de l'art antérieur comprenant :
- une division des matrices de pixels en blocs de N x M pixels (N et M étant des entiers non-nuls), c'est-à-dire N x M points d'un domaine spatial ; il en résulte pour chaque composante des blocs spatiaux de N par M coefficients ;
- un regroupement de plusieurs blocs spatiaux en un macro-bloc ; dans une réalisation courante, un macro-bloc intègre un certain nombre de blocs de luminance et un ou deux bloc(s) de chrominance, la résolution spatiale des pixels de luminance étant habituellement plus fine que celle des pixels de chrominance ;
- un assemblage de plusieurs macro-blocs en un segment ;
- une transformation, dans le domaine des fréquences, des N x M coefficients de chaque bloc spatial, pour obtenir un bloc fréquentiel, appelé bloc DCT ;
- une étape de quantification des coefficients ainsi obtenus à l'intérieur de chaque segment ; et
- une étape de compression conservative des coefficients quantifiés.

De la même manière qu'il existe une correspondance biunivoque entre un bloc spatial et un bloc fréquentiel, on peut associer à un macro-bloc de blocs spatiaux, un macro-bloc de blocs fréquentiels et à un segment dans le domaine spatial, un segment dans le domaine des fréquences. Par la suite on utilisera indifféremment le même terme « macro-bloc » (« segment ») pour désigner un macro-bloc (segment) dans le domaine spatial ou un macro-bloc (segment) dans le domaine fréquentiel.

Dans les procédés mentionnés ci-dessus, un macro-bloc est par exemple constitué de quatre blocs DCT de luminance et de deux ou quatre blocs DCT de chrominance. Un segment est par exemple constitué de cinq macro-blocs. Un segment doit être codé par un nombre de bits correspondant à une valeur cible, afin qu'on puisse maîtriser le débit de sortie du dispositif de compression.

La quantification consiste à diviser les coefficients des blocs DCT par un pas de quantification et à arrondir la valeur ainsi obtenue à l'entier le plus proche. Ce pas de quantification est choisi en fonction de la qualité souhaitée pour l'image restituée après compression et stockage. Plus le pas est grand, plus la perte d'informations introduites sur chaque coefficient est grande.

Chaque bloc DCT est généralement quantifié à l'aide d'un jeu de pas de quantification. Ainsi par exemple, dans la norme définie par « Specifications of Consumer-Use Digital VCRs » (HD Digital VCR Conference, Dec. 1994), un jeu de pas de quantification comporte quatre pas de quantification, chacun étant appliqué à une portion différente d'un même bloc.

US-A-5 677 734 décrit une méthode de compression de signaux vidéo dans laquelle les macro-blocs d'un segment font l'objet d'une première quantification produisant, après codage de Huffman, une quantité de données inférieure à une valeur cible, puis la finesse de quantification de certains des macro-blocs est augmentée en s'assurant que la quantité de données pour le segment ne dépasse pas la valeur cible. Les macro-blocs quantifiés plus finement sont choisis en fonction de leur localisation par rapport au centre de l'image.

Un but de l'invention est notamment de fournir un procédé de compression de signaux d'image permettant une compression plus efficace des données constitutives de ce signal.

Ce but est atteint, selon l'invention, avec un procédé de compression d'un signal d'image numérique comprenant des coefficients affectés à des pixels d'une image, ce procédé comportant la formation de blocs spatiaux de N x M coefficients affectés à des pixels de l'image, où N et M sont des entiers non-nuls, la transformation de chaque bloc spatial dans un domaine fréquentiel pour former un bloc fréquentiel de N x M coefficients, l'association d'une pluralité de blocs fréquentiels en macro-blocs et d'une pluralité de macro-blocs en segments, ainsi que les étapes suivantes pour chaque segment :
- première quantification des coefficients de chaque bloc fréquentiel, avec un premier jeu de pas de quantification, défini pour chaque bloc fréquentiel par un groupe d'index incluant un index identique pour tous les blocs fréquentiels d'un macro-bloc, et
- deuxième quantification des coefficients d'au moins une partie des blocs fréquentiels, avec un deuxième jeu de pas de quantification substitué au premier jeu de pas de quantification.

Le premier et le deuxième jeux de pas de quantification sont choisis en fonction d'une part, d'une valeur cible de la quantité de données nécessaire pour représenter les coefficients quantifiés du segment et d'autre part, de facteurs de gain respectivement calculés pour les blocs fréquentiels du segment, le facteur de gain relatif à un bloc représentant une réduction, lors du passage d'un jeu de pas de quantification à l'autre pour ledit bloc, de la quantité de données nécessaires pour représenter les coefficients quantifiés.

En effet, le procédé selon l'invention permet de modifier un ou plusieurs pas de quantification du jeu de pas de quantification de certains blocs, préférentiellement ceux pour lesquels cette modification n'entraîne pas de dégradation perceptible de l'image restituée après compression des données correspondantes, afin de conserver pour les autres blocs un jeu de pas de quantification avec des plus petits pas de quantification. Ainsi, on obtient, grâce au procédé selon l'invention une compression plus efficace, puisqu'avec une quantité de données équivalente, on observe une meilleure qualité de l'image prise dans son ensemble, ou avec une quantité de données inférieure, on observe une qualité de l'image prise dans son ensemble au moins équivalente, voire meilleure.

Dans la norme définie par "Specifications of consumer - Use Digital VCRS", un jeu de pas de quantification est défini par deux index : QNO et CNO (ou CLASS), respectivement "Quantification Number Order" et "Class Number Order".

Dans des modes de réalisation préférés de l'invention, le procédé selon l'invention comporte l'une et/ou l'autre des caractéristiques suivantes :
- l'index identique pour tous les blocs fréquentiels d'un macro-bloc est également identique pour tous les macro-blocs d'un segment ;
- le premier jeu de pas de quantification est choisi de façon que la quantité de données représentant les coefficients quantifiés de chaque segment, après la première quantification, soit supérieure à la valeur cible ;
- le deuxième jeu de pas de quantification donne lieu à une quantification plus grossière que le premier jeu de pas de quantification ;
- le deuxième jeu de pas de quantification est choisi de façon que la quantité de données représentant les coefficients quantifiés de chaque segment, après la deuxième quantification, soit inférieure ou égale à la valeur cible ;
- la deuxième quantification est effectuée en priorité pour le bloc fréquentiel du segment pour lequel le facteur de gain est le plus élevé, et répétée pour au moins un autre bloc fréquentiel du segment, par ordre de gain décroissant tant que la quantité de données nécessaires pour représenter les coefficients du segment est supérieure à ladite valeur cible ;
- le facteur de gain calculé pour un bloc fréquentiel est la différence entre les quantités de données nécessaires pour représenter les coefficients quantifiés dudit bloc fréquentiel avec le premier jeu et avec le deuxième jeu, respectivement, divisée par la quantité de données nécessaires pour représenter les coefficients quantifiés dudit bloc fréquentiel avec le premier jeu ;
- lesdites quantités de données sont calculées au cours de la première quantification et mémorisées pour calculer les gains ; et
- la première quantification comprend trois traitements en parallèle, chaque traitement comprenant des opérations de quantification, de codage et de calcul de la quantité de données nécessaires pour représenter les données quantifiées du segment.

Selon un autre aspect, l'invention propose un dispositif de compression d'un signal vidéo numérique, notamment pour la mise en oeuvre du procédé selon l'une des revendications précédentes, ce dispositif comportant :
- des moyens d'entrée de données représentées par des coefficients affectés à des pixels d'une image,
- des moyens de formation de blocs spatiaux de N x M coefficients affectés à des pixels de l'image, où N et M sont des entiers non-nuls,
- des moyens de transformation de chaque bloc spatial dans un domaine fréquentiel pour former un bloc fréquentiel de N x M coefficients, et
- des moyens de traitement de segments d'image composés chacun d'un nombre déterminé de macro-blocs eux-mêmes composés d'un nombre déterminé de blocs fréquentiels,
dans lequel les moyens de traitement d'un segment comprennent :
- des premiers moyens de quantification des coefficients de chaque bloc fréquentiel du segment, pour sélectionner un premier jeu de pas de quantification, attaché à chaque bloc fréquentiel et défini pour chaque bloc fréquentiel par un groupe d'index incluant un index identique pour tous les blocs fréquentiels d'un macro-bloc,
- des deuxièmes moyens de quantification pour quantifier au moins une partie des blocs fréquentiels, avec un deuxième jeu de pas de quantification substitué au premier pas de quantification, et
- des moyens de calcul d'un facteur de gain représentant une réduction, lors du passage d'un jeu de pas de quantification à l'autre, de la quantité de données nécessaires pour représenter les coefficients quantifiés, ce facteur de gain étant pris au niveau des deuxièmes moyens de quantification pour sélectionner les blocs fréquentiels pour lesquels le premier jeu de pas de quantification est substitué par le deuxième jeu de pas de quantification.

Dans des modes de réalisation préférés du dispositif selon l'invention, celui-ci comporte l'une et/ou l'autre des dispositions suivantes :
- il comporte des moyens de tri des blocs ayant subis la première quantification, par ordre décroissant du facteur de gain ;
- il comporte des moyens pour substituer le deuxième jeu de pas de quantification au premier jeu de pas de quantification, en traitant les blocs, par ordre de facteur de gain décroissant, jusqu'à ce que la quantité des données nécessaires pour représenter les données quantifiées correspondant au segment soit inférieure ou égale à une valeur cible ;
- les premiers moyens de quantification comprennent trois circuits de quantification en parallèle ;
- il comprend des moyens de mémoires des quantités de données nécessaires pour représenter les données quantifiées correspondant au segment, avec le premier jeu et avec le deuxième jeu de pas de quantification, et calculées en relation avec la première quantification ; et
- il comprend des moyens de calcul du facteur gain, dans lesquels le facteur de gain pour un bloc fréquentiel est la différence entre les quantités de données nécessaires pour représenter les coefficients quantifiés dudit bloc fréquentiel avec le premier jeu et avec le deuxième jeu, respectivement, divisée par la quantité de données nécessaires pour représenter les coefficients quantifiés dudit bloc fréquentiel avec le premier jeu.

Selon encore un autre aspect, l'invention propose un programme chargeable dans une mémoire, associée à un processeur, et comprenant des portions de code pour la mise en oeuvre d'un procédé tel que défini ci-dessus, lors de l'exécution dudit programme.

D'autres aspects, buts et avantages de l'invention apparaîtront à la lecture de la description détaillée qui suit d'un exemple, non limitatif, de dispositif de compression de signaux vidéos pour la mise en oeuvre d'un exemple, également non limitatif, de procédé selon l'invention.

L'invention sera mieux comprise à l'aide des dessins annexés sur lesquels :
- la figure 1 est un schéma synoptique d'un exemple de dispositif conforme à la présente invention ;
- la figure 2 représente schématiquement un exemple de structure de données pouvant être traitées par le dispositif schématisé sur la figure 1 ;
- la figure 3 est un tableau donnant les valeurs d'index définissant des jeux de pas de quantification pour la mise en oeuvre du dispositif représenté sur la figure 1 ;
- la figure 4 est un algorithme de la stratégie de quantification dans le dispositif de la figure 1 ;
- la figure 5 est un diagramme représentant la quantité des données quantifiées pour un segment, obtenue au cours de la mise en oeuvre de certaines opérations sur le dispositif de la figure 1 ;
- la figure 6 représente schématiquement le flux de données compressées en sortie du dispositif de la figure 1 ;
- la figure 7 représente schématiquement une variante d'une partie du dispositif de la figure 1 ; et
- la figure 8 représente schématiquement les étapes de détermination de l'identifiant du jeu de pas de première quantification par la partie du dispositif représentée sur la figure 7.

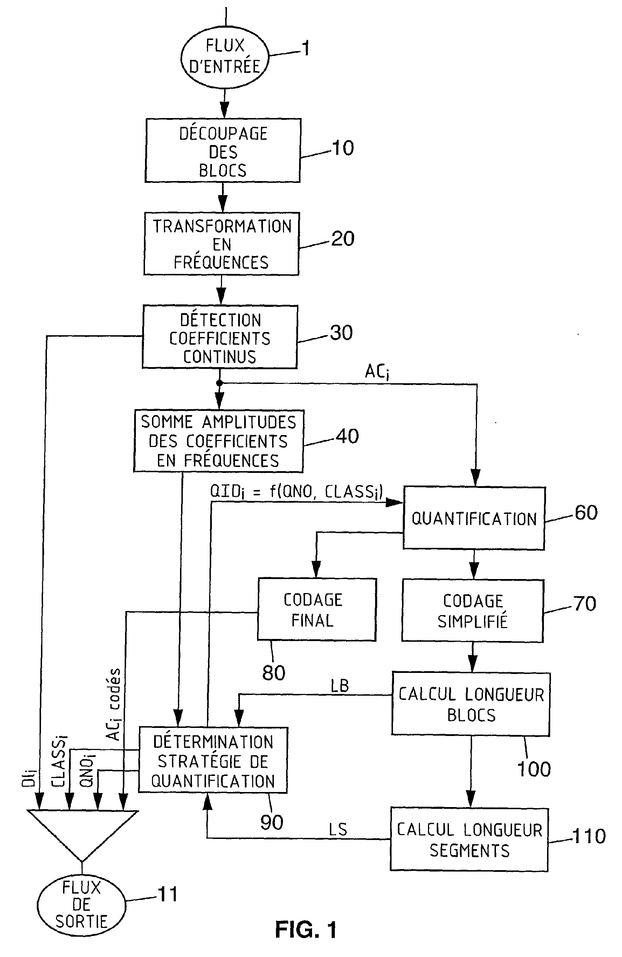

On a représenté schématiquement sur la figure 1 un exemple, non limitatif de dispositif de compression de signaux vidéo conforme à l'invention.

Selon cet exemple, un flux d'entrée 1 est injecté en entrée du dispositif. Ce flux d'entrée 1 est constitué d'un ensemble de données numérisées correspondant aux informations sur les pixels constitutifs d'une image vidéo.

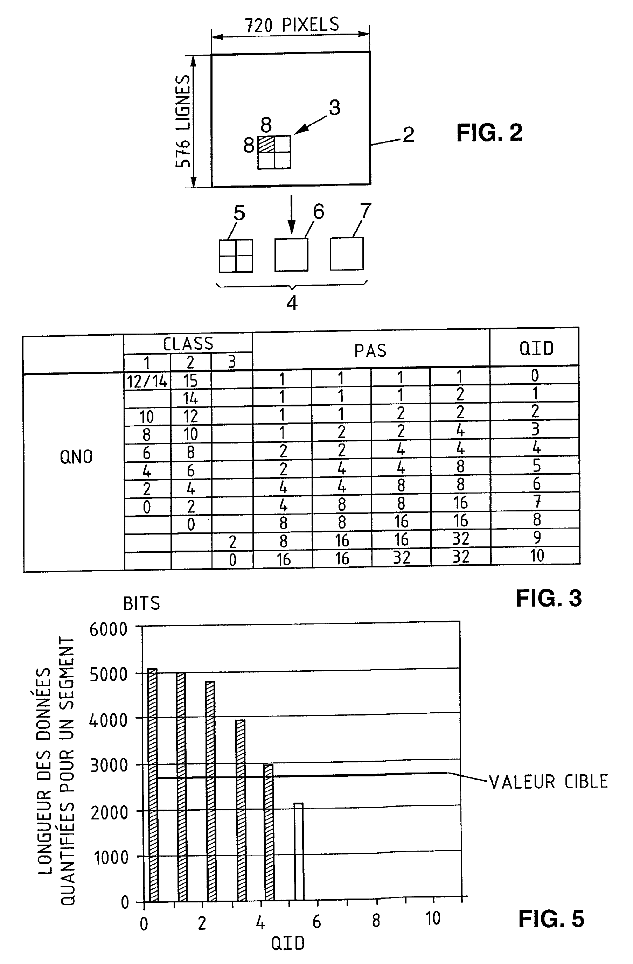

D'une manière générale, une image vidéo est décomposée en différentes entités. A titre illustratif, nous prendrons pour exemple le cas où, comme représenté sur la figure 2, une image de 720 pixels sur 576 lignes est décomposée en trois plans mémoire 2 correspondant chacun à une composante (une composante de luminance et deux composantes de chrominance), chaque plan mémoire étant lui même décomposé en blocs spatiaux 3 constitués de 8x8 pixels. Ces blocs spatiaux 3 sont regroupés en macro-blocs 4 de six blocs spatiaux 3 (quatre blocs de luminance 5 et deux blocs de chrominance 6, 7). Cinq de ces macro-blocs 4 pris à des positions pseudo-aléatoires dans l'image forment un video segment.

Le flux d'entrée 1 est constitué d'une succession de video segments dont la taille est à compresser.

La décomposition de chaque video segment en blocs 3 est effectuée par un module 10. Chaque bloc 3 subit ensuite, au niveau d'un module 20 une transformation des données du domaine spatial au domaine fréquentiel. Cette transformation correspond par exemple à une transformée en cosinus discrète (DCT, « Discrete Cosine Transform »). Les blocs fréquentiels résultant de cette transformation sont appelés ci-après « blocs DCT ». Un bloc DCT est aussi composé de 8x8 coefficients. L'un de ces coefficients, en haut à gauche du bloc, est un coefficient correspondant à une composante continue de la décomposition dans le domaine fréquentiel, les autres étant des coefficients correspondant à des composantes en fréquence. Le coefficient correspondant à une composante continue d'un bloc DCT i est noté DCi. Les coefficients correspondant à des composantes en fréquence pour ce même bloc DCT i sont notés ACi.

Un module 30 détecte le coefficient continu DCi, parmi les coefficients de chaque bloc DCT i. Le coefficient DCi de chaque bloc DCT i est intégré au flux de sortie 11 du dispositif de compression selon l'invention.

Un module 40 somme les valeurs absolues des coefficients ACi et détermine une classe CLASSi de chaque bloc DCT i en fonction de cette valeur. En effet, si la somme de ces valeurs absolues est supérieure à 255, il faut quantifier avec la classe CLASSi = 3, sinon on prend CLASSi = 2. Nous verrons plus loin l'utilité de ce paramètre CLASSi. La classe CLASSi de chaque bloc DCT i est déterminée par un module 90 de détermination de la stratégie de quantification en fonction de la somme des valeurs absolues des coefficients ACi déterminée par le module 40. Elle est également intégrée au flux de sortie 11.

Les pas de quantification utilisables pour quantifier les différents blocs DCT d'un macro-bloc 4 font l'objet de spécifications (par exemple, « Specifications of Consumer-Use Digital VCRs », HD Digital VCR Conference, Dec. 1994). Selon ces spécifications, un jeu de quatre pas de quantification est utilisé pour quantifier différentes zones d'un bloc DCT. Deux paramètres QNO et CLASS servent à définir le meilleur jeu de pas de quantification. Le paramètre CLASS correspond à la classe indiquée ci-dessus. La figure 3 donne un tableau regroupant les valeurs de ces différents paramètres.

Le paramètre QNO, indiqué dans le flux de sortie 11 du dispositif, est le même pour tous les blocs d'un macro-bloc. A chaque bloc i peut être attaché un couple (QNOi, CLASSi). Un tel couple peut aussi être remplacé par un paramètre QIDi unique et spécifique de chaque bloc DCT i (voir « A New Quantizer Selection Scheme for Digital VCR », Rhee et al., IEEE Trans on Consumer Electronics, Vol 43, N°3, Août 1997, pp. 879-885 et figure 3).

Un module 60 quantifie chaque bloc DCT i en fonction des pas de quantification correspondant au paramètre QIDi fourni par le module 90.

Un module 70 effectue un codage simplifié des données de chaque bloc DCT i. Ce codage est simplifié dans la mesure où il ne réalise que les étapes de codage nécessaires aux calculs de longueurs de données des étapes suivantes.

D'une manière générale, le terme « longueur », ou le terme « quantité », est utilisé dans ce document comme synonyme de l'expression « nombre de bits nécessaires pour coder des données quantifiées ».

Ensuite, un module 100 calcule la longueur des données codant pour les blocs DCT i. La longueur LB des données codant pour les informations relatives à un bloc DCT i, correspondant à un QIDi donné, est mémorisée au niveau du module 90, pour une utilisation ultérieure. Puis, un module 110 calcule la longueur LS des données codant pour les cinq macro-blocs 4 d'un vidéo segment.

La longueur LS des données compressées correspondant à un vidéo segment est fournie au module 90 pour déterminer la stratégie de quantification des différents blocs d'un vidéo segment et ceci pour chaque vidéo segment.

Lorsque la longueur LS est inférieure à une valeur cible VC, les coefficients ACi font l'objet d'un codage final par un module 80 en fonction de QNOi et de CLASSi. La valeur cible VC correspond à une longueur de données compressées compatible avec des volumes de stockage et des vitesses de traitement du signal vidéo acceptables. Les données correspondant aux coefficients ACi et compressées par ce codage final, sont intégrées au flux de sortie 11. Les paramètres QNOi, identiques pour tous les blocs d'un macro-bloc 4 et CLASSi sont aussi insérés dans le flux de sortie 11. Leur connaissance suffit à déduire QIDi pour chaque bloc DCT i.

Les informations relatives aux coefficients ACi codés correspondent au critère de qualité défini au niveau de la stratégie de quantification.

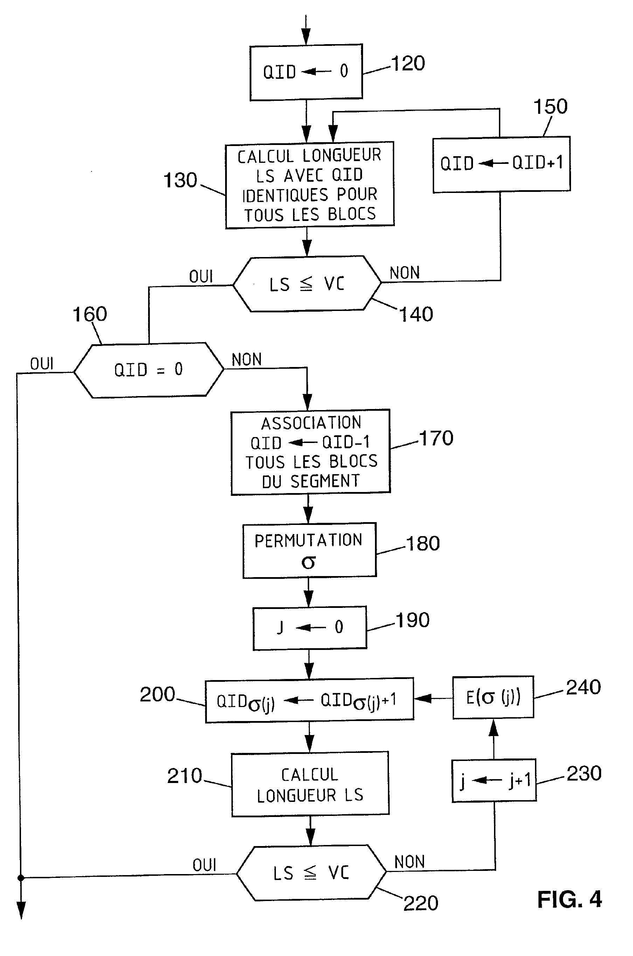

La figure 4 représente schématiquement l'algorithme de la stratégie de quantification.

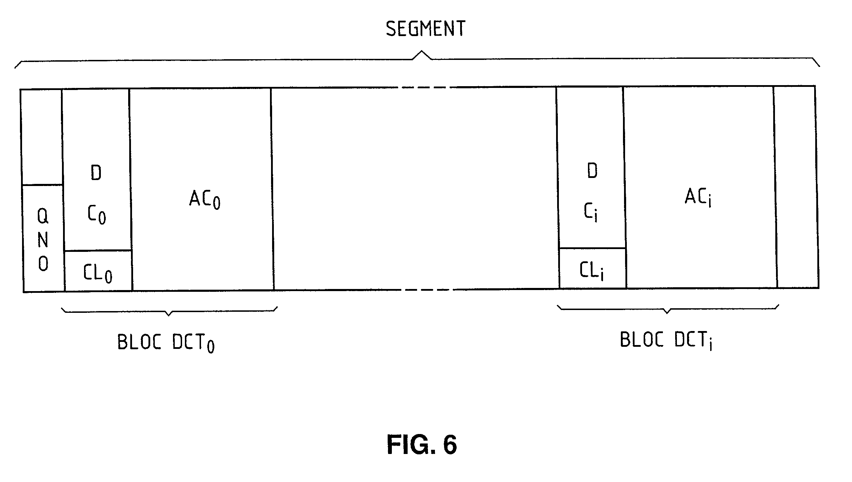

En 120, QID est initialisé à 0. Plus petit est QID, plus les pas de quantification du jeu correspondant sont fins, meilleure est la qualité de l'image compressée (voir figure 5).

Puis un calcul 130 de la longueur LS des données compressées codant pour un vidéo segment est effectué en utilisant un QID = QIDi = 0 identique pour tous les macro-blocs du vidéo segment et par conséquent pour tous les blocs DCT i de ce vidéo segment. Ce calcul 130 est réalisé par les modules 60, 70, 100 et 110 de la manière indiquée ci-dessus.

Un test 140 est effectué pour déterminer si cette longueur LS est inférieure ou égale à la valeur cible VC.

Dans la négative, QID est incrémenté d'une unité par l'opération 150. Les pas de quantification correspondant à la nouvelle valeur de QID permettent de quantifier les données du vidéo segment de manière plus grossière, c'est-à-dire avec moins de données compressées mais également avec une perte de la qualité de l'image reformée à partir des données compressées.

Les opérations 130, 140 et 150, correspondant à une première quantification (module 60), sont répétées tant que la longueur LS reste supérieure à la valeur cible VC. Elles consistent à déterminer un jeu de pas de quantification identique pour les trente blocs DCT i d'un vidéo segment, en incrémentant ces pas progressivement jusqu'à ce que le nombre de bits nécessaires pour coder les données quantifiées du vidéo segment soit inférieur à la valeur cible VC. Ceci est illustré par la figure 5, qui donne un exemple de diagramme représentant la longueur des données codant pour un vidéo segment en fonction de QID. La ligne horizontale vers 2700 bits correspond à la valeur cible VC. QID = 5, pour cet exemple, donne une longueur de données compressées inférieure à VC, tandis que QID = 4, toujours pour cet exemple, donne une longueur de données compressées supérieure à VC.

Lors du calcul 130, les longueurs LB de données codant pour les informations d'un bloc i sont déterminées et mémorisées pour chaque valeur de QID testée.

Lorsque le test 140 est positif, un test 160 vérifie que QID = 0.

Si tel est effectivement le cas, les données ne peuvent être davantage compressées et aucun autre traitement n'est nécessaire. Le flux de sortie 11 est composé avec les valeurs DCi, ACi et les paramètres CLASSi et QNO correspondant à QID = 0 de chaque bloc DCT i. Un décodeur opérant une lecture du flux de sortie 11, retrouve QIDi = f(QNO, CLASSi).

Sinon on associe en 170 la valeur QIDi = QID-1 à tous les blocs DCT i du vidéo segment. Suite à cette opération, la longueur LS des données compressées correspondant au vidéo segment qui serait calculée avec QIDi = QID-1 pour tous les blocs DCT i, serait alors à nouveau supérieure à la valeur cible VC.

Les opérations suivantes consistent à ramener la valeur LS au dessous de la valeur cible en ajustant le jeu de pas de quantification de certains blocs DCT, ces blocs DCT étant ceux pour lesquels l'augmentation des pas de quantification nuit le moins à la qualité de l'image compressée.

Les blocs DCT i subissent alors une permutation σ 180. Cette permutation σ 180 ordonne les blocs DCT i du vidéo segment par ordre de facteur de qualité QF décroissant.

QF est le rapport entre la longueur de données nécessaires pour coder un bloc DCTi avec QIDi = QID-1 et la différence entre cette longueur et celle nécessaire pour coder un bloc DCT i avec QIDi = QID+1. QF est l'inverse du facteur de gain. Plus élevé est le facteur de qualité d'un bloc DCT i, plus la longueur des données nécessaires pour coder ce bloc DCT i sera petite, sans perte apparente de qualité d'image. QF mesure le gain sur la réduction du nombre de bits nécessaires pour coder les données quantifiées correspondant au vidéo segment. Ce facteur de qualité fait ressortir les blocs DCT qui peuvent être codés avec une petite longueur de données pour une même qualité apparente. Augmenter les valeurs du jeu de pas de quantification de certains blocs DCT pour une moins bonne qualité associée aux blocs DCT de facteur de qualité faible, permet d'avoir plus de blocs DCT dont les pas restent plus petits, donc plus de blocs DCT correspondant à une meilleure qualité d'image comprimée. La qualité de l'image totale est alors améliorée.

Le facteur de qualité QF est aisément et rapidement calculé. En effet, les longueurs LB de données codant pour les informations d'un bloc i, ont déjà été déterminées et mémorisées pour le calcul 130 de la longueur LS des données compressées codant pour un vidéo segment.

Les blocs DCT ordonnés par la permutation σ 180 sont ré-indexés par un indice j, l'indice j croissant lorsque QF décroît.

Après initialisation 190 de l'indice j à 0, une incrémentation 200 d'une unité du QID_{σ(j=0)} est réalisée. Puis un calcul 210 de la longueur LS des données compressées pour le segment 9 est effectué en utilisant pour le bloc DCT_{σ(j=0)} le paramètre QID_{σ(j=0)} = QID+1 et pour tous les autres blocs DCT_{σ(j)}, le paramètre QID_{σ(j)} = QID-1. Le passage de QID-1 à QID+1 correspond en fait à conserver QNO constant et à changer la classe CLASSi.

Un test 220 est alors effectué pour déterminer si la longueur LS du vidéosegment est redevenue inférieure à la valeur cible VC.

Dans la négative, l'indice j est incrémenté d'une unité par l'opération 230.

Les opérations 200, 210, 220, 230 et 240, correspondant à une deuxième quantification, sont reproduites jusqu'à ce que LS soit inférieure ou égale à la valeur cible VC. Lorsque c'est le cas, le test 220 donne une réponse affirmative. Le processus de détermination des pas de quantification est terminé.

Les données sont alors codées, par le module 80, avec les jeux de pas déterminés. Elles sont compressées et formatées dans le flux de sortie 11 comme représenté schématiquement sur la figure 6.

Pour chaque macro bloc, on a une en-tête comprenant des bits codant pour le coefficient QNO. L'en-tête de chaque bloc DCT i comprend des bits codant pour DCi et deux bits pour la classe CLASSi de ce bloc DCT i. Le reste code pour les coefficients ACi.

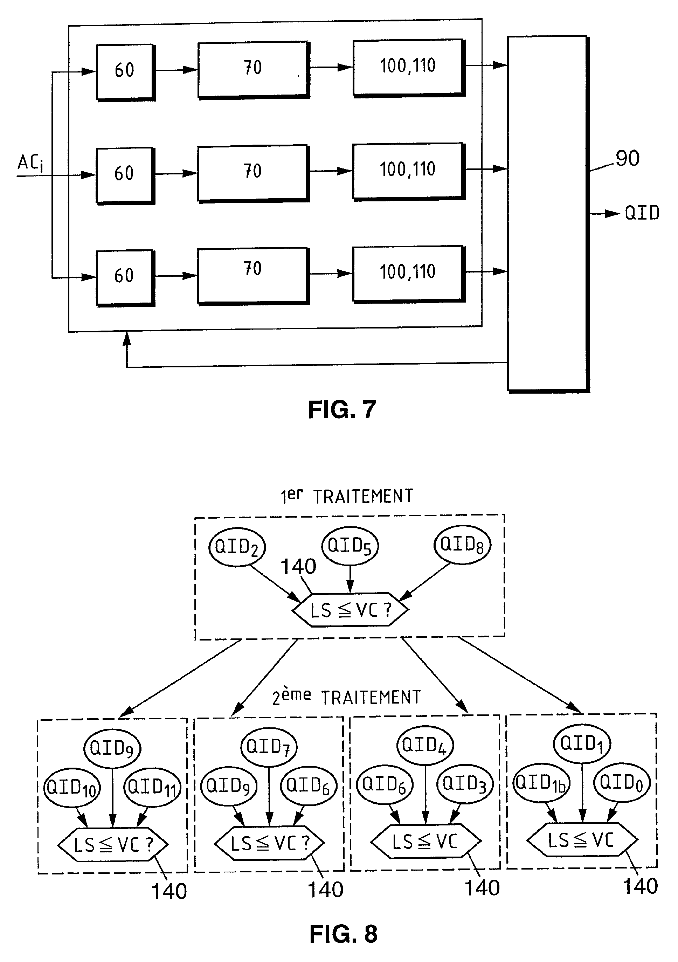

Selon une variante, illustrée par la figure 7, du dispositif décrit ci-dessus, les opérations 60, 70 et 100 sont réalisées en parallèle par trois circuits 250 identiques. Ce montage à trois circuits 250 en parallèle présente l'avantage de permettre une convergence plus rapide de la longueur LS des données quantifiées vers la valeur cible VC. En effet, comme illustré par la figure 8, lors d'un premier traitement par les trois circuits 250, trois longueurs LS de données quantifiées sont déterminées, en partant de trois QID différents, et comparées à la valeur cible VC. En fonction, du résultat de cette comparaison, trois nouveaux QID sont choisis pour effectuer un deuxième traitement par les trois circuits 250. De ce deuxième traitement résultent trois nouvelles longueurs LS de données qui sont comparées avec la valeur cible VC. Le paramètre QID donnant la longueur LS la plus proche de VC par valeur inférieure est retenu pour les opérations 160 et suivantes.

En fait, une autre étape est nécessaire. En effet, si QID = 1, QID-1 = 0 et QID+1 n'est pas égal à 2 mais plutôt un coefficient que l'on pourrait désigner par QID1b. Néanmoins, ce cas est peu probable et la compression d'un segment avec QID=1 ne nécessite pas d'être davantage affinée.

Il est évident que les différentes opérations décrites ci-dessus peuvent être effectuées par un ou plusieurs circuit(s) électronique(s) et/ou un ou plusieurs processeur(s) programmés de manière appropriée à la mise en oeuvre du procédé selon l'invention.

## Revendications

1. Procédé de compression d'un signal d'image numérique comprenant des coefficients affectés à des pixels d'une image, ce procédé comportant la formation de blocs spatiaux (3) de N x M coefficients affectés à des pixels de l'image, où N et M sont des entiers non-nuls, la transformation de chaque bloc spatial (3) dans un domaine fréquentiel pour former un bloc fréquentiel de N x M coefficients, l'association d'une pluralité de blocs fréquentiels en macro-blocs (4) et d'une pluralité de macro-blocs (4) en segments , ainsi que les étapes suivantes pour chaque segment :
- première quantification (60) des coefficients de chaque bloc fréquentiel, avec un premier jeu de pas de quantification, défini pour chaque bloc fréquentiel par un groupe d'index incluant un index identique pour tous les blocs fréquentiels d'un macro-bloc (4), et
- deuxième quantification des coefficients d'au moins une partie des blocs fréquentiels, avec un deuxième jeu de pas de quantification substitué au premier pas de quantification,
- le premier et le deuxième jeux de pas de quantification étant choisis en fonction d'une part, d'une valeur cible de la quantité de données nécessaire pour représenter les coefficients quantifiés du segment et d'autre part, de facteurs de gain respectivement calculés pour les blocs fréquentiels du segment, le facteur de gain relatif à un bloc représentant une réduction, lors du passage d'un jeu de pas de quantification à l'autre pour ledit bloc, de la quantité de données nécessaires pour représenter les coefficients quantifiés.

2. Procédé selon la revendication 1, dans lequel l'index identique pour tous les blocs fréquentiels d'un macro-bloc (4) est également identique pour tous les macro-blocs (4) d'un segment.

3. Procédé selon l'une des revendications précédentes, dans lequel le premier jeu de pas de quantification est choisi de façon que la quantité de données représentant les coefficients quantifiés de chaque segment , après la première quantification, soit supérieure à la valeur cible.

4. Procédé selon la revendication 3, dans lequel le deuxième jeu de pas de quantification donne lieu à une quantification plus grossière que le premier jeu de pas de quantification.

5. Procédé selon la revendication 4, dans lequel le deuxième jeu de pas de quantification est choisi de façon que la quantité de données représentant les coefficients quantifiés de chaque segment, après la deuxième quantification, soit inférieure ou égale à la valeur cible.

6. Procédé selon la revendication 5, dans lequel la deuxième quantification est effectuée en priorité pour le bloc fréquentiel du segment pour lequel le facteur de gain est le plus élevé, et répétée pour au moins un autre bloc fréquentiel du segment, par ordre de gain décroissant tant que la quantité de données nécessaires pour représenter les coefficients du segment est supérieure à ladite valeur cible.

7. Procédé selon l'une des revendications précédentes, dans lequel le facteur de gain calculé pour un bloc fréquentiel est la différence entre les quantités de données nécessaires pour représenter les coefficients quantifiés dudit bloc fréquentiel avec le premier jeu et avec le deuxième jeu, respectivement, divisée par la quantité de données nécessaires pour représenter les coefficients quantifiés dudit bloc fréquentiel avec le premier jeu.

8. Procédé selon la revendication 7, dans lequel lesdites quantités de données sont calculées au cours de la première quantification et mémorisées pour calculer les gains.

9. Procédé selon l'une des revendications précédentes dans lequel la première quantification comprend trois traitements en parallèle, chaque traitement comprenant des opérations de quantification, de codage et de calcul de la quantité de données nécessaires pour représenter les données quantifiées du segment .

10. Dispositif de compression d'un signal d'image numérique, comportant :
- des moyens d'entrée de données représentées par des coefficients affectés à des pixels d'une image,
- des moyens de formation de blocs spatiaux (3) de N x M coefficients affectés à des pixels de l'image, où N et M sont des entiers non-nuls,
- des moyens de transformation de chaque bloc spatial (3) dans un domaine fréquentiel pour former un bloc fréquentiel de N x M coefficients, et
- des moyens de traitement de segments d'image composés chacun d'un nombre déterminé de macro-blocs (4) eux-mêmes composés d'un nombre déterminé de blocs fréquentiels,
dans lequel les moyens de traitement d'un segment comprennent :
- des premiers moyens de quantification des coefficients de chaque bloc fréquentiel du segment , pour sélectionner un premier jeu de pas de quantification, attaché à chaque bloc fréquentiel et défini pour chaque bloc fréquentiel par un groupe d'index incluant un index identique pour tous les blocs fréquentiels d'un macro-bloc (4),
- des deuxièmes moyens de quantification pour quantifier au moins une partie des blocs fréquentiels, avec un deuxième jeu de pas de quantification substitué au premier pas de quantification, et
- des moyens de calcul, pour chaque bloc, d'un facteur de gain représentant une réduction, lors du passage d'un jeu de pas de quantification à l'autre, de la quantité de données nécessaires pour représenter les coefficients quantifiés, ce facteur de gain étant pris au niveau des deuxièmes moyens de quantification pour sélectionner les blocs fréquentiels pour lesquels le premier jeu de pas de quantification est substitué par le deuxième jeu de pas de quantification.

11. Dispositif selon la revendication 10, comportant des moyens de tri des blocs ayant subis la première quantification, par ordre décroissant du facteur de gain.

12. Dispositif selon l'une des revendications 10 et 11, comportant des moyens pour substituer le deuxième jeu de pas de quantification au premier jeu de pas de quantification, en traitant les blocs, par ordre de facteur de gain décroissant, jusqu'à ce que la quantité des données nécessaires pour représenter les données quantifiées correspondant au segment soit inférieure ou égale à une valeur cible.

13. Dispositif selon l'une des revendications 10 à 12, dans lequel les premiers moyens de quantification comprennent trois circuits de quantification en parallèle.

14. Dispositif selon l'une des revendications 10 à 13, comprenant des moyens de mémoires des quantités de données nécessaires pour représenter les données quantifiées correspondant au segment, avec le premier jeu et avec le deuxième jeu, et calculées en relation avec la première quantification.

15. Dispositif selon la revendication 14, comprenant des moyens de calcul du facteur gain, dans lesquels le facteur de gain pour un bloc fréquentiel est la différence entre les quantités de données nécessaires pour représenter les coefficients quantifiés dudit bloc fréquentiel avec le premier jeu et avec le deuxième jeu, respectivement, divisée par la quantité de données nécessaires pour représenter les coefficients quantifiés dudit bloc fréquentiel avec le premier jeu.

16. Programme chargeable dans une mémoire, associée à un processeur, et comprenant des portions de codes pour la mise en oeuvre d'un procédé selon l'une des revendications 1 à 9, lors de l'exécution dudit programme.
